# EUROPÄISCHE PATENTSCHRIFT

(11) **EP 2 272 312 B1**
(45) Veröffentlichungstag und Bekanntmachung des Hinweises auf die Patenterteilung: **20.06.2012**
(21) Anmeldenummer: 10007022.6
(22) Anmeldetag: 07.07.2010
(51) Int. Cl.: A01B 63/111, A01D 41/127, A01D 41/14, A01B 69/00, A01D 90/12

(54) **Landwirtschaftliches Gerät**
Agricultural device
Appareil agricole

(30) Priorität: 09.07.2009 DE 102009032437
(43) Veröffentlichungstag der Anmeldung: 12.01.2011
(73) Patentinhaber: Alois Pöttinger Maschinenfabrik GmbH, 4710 Grieskirchen (AT)
(72) Erfinder: Baldinger, Markus, 4084 St. Agatha (AT); Edelbauer, Roland, 4600 Thalheim (AT); Hofinger, Markus, 4721 Altschwendt (AT); Reininger, Markus, 4753 Taiskirchen (AT)
(74) Vertreter: Thoma, Michael

(56) Entgegenhaltungen:
- EP-A1- 1 053 671
- EP-A1- 1 813 142
- DE-A1-102005 005 556
- DE-A1-102005 051 407

## Beschreibung

Die vorliegende Erfindung betrifft ein landwirtschaftliches Gerät, insbesondere für Erntemaschinen wie Ladewagen, Pressen oder selbstfahrende Erntegutaufnehmer, mit mindestens einer Erfassungseinrichtung zur berührungslosen Erfassung einer Erntegutschwad- und/oder Bodeneigenschaft, insbesondere Höhe, Breite und/oder Kontur zumindest eines Schwads und/oder eines Bodenabschnitts, die mehrere berührungslos arbeitende Abtastsensoren zur Abtastung des Schwads und/oder des Bodenabschnitts sowie eine Auswerteeinheit zur Bestimmung der Erntegutschwad- und/oder Bodeneigenschaft aus den mehreren Signalen der Abtastsensoren aufweist.

Bei Landmaschinen ist es bekannt geworden, diverse Arbeitsaggregate der Maschinen in Abhängigkeit der vor dem Arbeitsaggregat liegenden Boden- oder Schwadkontur zu steuern. Beispielsweise wurde für Ladewagen vorgeschlagen, die sogenannte Pick-Up, also die Erntegutaufnahmeeinrichtung, die üblicherweise eine rotierende Stachelwalze aufweist, sozusagen schwebend über den Boden zu führen und die Arbeitsgeschwindigkeit der Stachelwalze in Abhängigkeit des Schwadvolumens zu steuern. Hierzu wird mittels eines Bodensensors die Bodenkontur vor der Pick-Up erfaßt, um die letztere bei Bodenwellen anzuheben und in Senken abzusenken, und die Schwaddicke mittels eines Schwadsensors zu erfassen, um eine präzise Erntegutaufnahme zu erreichen.

Beispielsweise beschreibt die DE 102 12 722 A1 einen Ladewagen, bei dem mit einem Ultraschallsensor der Boden vor der Pick-Up abgetastet wird. In Abhängigkeit des kontinuierlichen Höhensignals dieses Sensors wird die Höhenlage der Pick-Up gesteuert. Aus der DE 102 14 648 A1 ist ein Mähdrescher bekannt, bei dem in ähnlicher Weise das Getreideschneidwerk hinsichtlich seiner Höhenstellung über dem Boden gesteuert wird. Der Bodenabstand eines Maschinenrahmens wird hierbei mit Hilfe eines Radarsensors erfaßt, der den Boden vor dem Schneidwerk abtastet. Eine ähnliche Steuerung zeigt die DE 102 27 484 A1, bei der das Schneidwerk eines Mähdreschers in Abhängigkeit der Bodenneigung vor dem Schneidwerk gesteuert wird. Die genannte Bodenneigung wird hier mit Hilfe eines Laserstrahlsensors ermittelt. Die DE 42 43 172 A1 schlägt vor, die Wirkhöhe des Hächslers einer Rübenerntemaschine in Abhängigkeit des Signal eines Ultraschallsensors zu steuern, der den Boden abtastet. Die EP 1 356 729 B1 schlägt es vor, mittels eines Radarsensors die Dichte und die Feuchte des Feldbewuchses zu ermitteln und in Abhängigkeit dieser ermittelten Parameter das Schneidwerk eines Mähdreschers zu steuern. Weiterhin schlägt die EP 1 190 613 A2 eine Heuwerbungsmaschine in Form eines Schwadrechens vor, bei dem mit Hilfe eines Ultraschallsensors am Maschinenrahmen die Bodenoberfläche auf Unregelmäßigkeiten wie Kanten oder Löcher abgetastet werden soll, um den Schwadrechen entsprechend zu steuern. Aus der DE 198 59 875 A1 ist es weiterhin bekannt, an einer Heuwerbungsmaschine einen kapazitiven oder nach dem Dopplereffekt arbeitenden Sensor vorzusehen, mit Hilfe dessen nicht unmittelbar die Bodenoberfläche selbst, sondern ein darauf liegender Erntegutschwad erfaßt werden soll. Konkret sollen die Arbeitsorgane der Heuwerbungsmaschine angehoben werden, wenn dieser Sensor einen Randschwad erfaßt, der nicht von den Arbeitsorganen bearbeitet werden soll. Gemäß EP 20 36 426 A1 wird ein Erntegutschwad mit mehreren seitlich unter dem Traktor angeordneten Ultraschallsensoren abgetastet, um den seitlichen Abstand des Erntegutschwads von den Spurrändern des Traktors bestimmen zu können, was dann in eine Lenkhilfe umgesetzt wird. Die EP 18 13 142 A1 schlägt vor, einen Erntegutschwad mit akustischen Signalen im hörbaren Frequenzbereich abzutasten, um den Erntegutschwad durchleuchten und darin liegende Hindernisse erkennen zu können. Aus der DE 10 2005 005 556 A1 ist es ferner bekannt, einen Erntegutschwad mit einem frontseitig am Schlepper angeordneten Ultraschallsensor abzutasten sowie an einem von dem Schlepper gezogenen Ladewagen die durch den aufgenommenen Schwad induzierte Belastung zu erfassen, um sowohl in Abhängigkeit des Schwaderfassungssignals als auch des Lastsignals die Geschwindigkeit des Schleppers und/oder der Ladewagen-Pickup zu variieren.

Die Anforderungen an die Sensoren für die Bodenerfassung sind jedoch insbesondere bei Erntemaschinen, die auf dem Boden liegendes Erntegut, beispielsweise einen Heuschwad bearbeiten, gegenläufig und bislang noch nicht optimal gelöst. So ist es zur Erfassung des Volumens und/oder der Dichte eines Heu- oder Strohschwads und/oder der Geometrie, insbesondere der Fläche, und/oder der Abweichung zur Mitte vorteilhaft, die Abtastung mit mehreren Sensoren bzw. Signalkeulen von verschiedenen Blickrichtungen aus vorzunehmen, um aus einer Blickrichtung auftretende Schallschatten zu vermeiden und zu präziseren Ergebnissen zu kommen. Dabei kommt es jedoch zu einer gegenseitigen Behinderung der Sensoren, da die Reflexionen des Signals des einen Sensors auch von den anderen Sensoren aufgenommen werden und der Sensor nicht ohne weiteres unterscheiden kann, ob die Reflexion von "seinem" Signal oder einem "anderen" Signal kommt. Ferner ist es wünschenswert, unterschiedliche Schwadeigenschaften zu erfassen. Einerseits soll das Erntegut sozusagen durchleuchtet und tatsächlich die Bodenkontur selbst erfaßt werden. Hierbei kann es bei den oftmals vorgeschlagenen Ultraschallsensoren an der Schwadoberfläche zu Reflektionen kommen, die die Boden- oder Hinderniserfassung beeinträchtigen. Andererseits soll eben nicht nur die Oberfläche des Bodens selbst erfaßt werden, sondern auch die Schwadkontur bzw. die Dichte und/oder Fläche des Erntegutes, um beispielsweise das Schwadvolumen und die Erntegutmenge erfassen zu können. Durch die vielfältigen Reflexionen und Überlagerungen sind die verschiedenen Schwadeigenschaften jedoch nur schwer exakt zu bestimmen.

Hier versucht die vorliegende Erfindung Abhilfe zu schaffen. Ihr liegt die Aufgabe zugrunde, ein verbessertes landwirtschaftliches Gerät der genannten Art zu schaffen, das Nachteile des Standes der Technik vermeidet und letzteren in vorteilhafter Weise weiterbildet. Vorzugsweise soll es mit einer einfachen Sensoranordnung ermöglicht werden, die gewünschte Erntegutschwad- und/oder Bodeneigenschaft präzise ohne Signalschatten bei kurzen Messzeiten zu erfassen.

Erfindungsgemäß wird diese Aufgabe durch ein landwirtschaftliches Gerät gemäß Anspruch 1 gelöst. Bevorzugte Ausgestaltungen der Erfindung sind Gegenstand der abhängigen Ansprüche.

Erfindungsgemäß wird eine störende Überlagerung der sich räumlich überlagernde Signalkeulen und Rücklaufsignalkeulen durch eine getaktete bzw. in zeitlicher Abfolge verschiedene Aktivierung der Abtastsensoren vermieden, während andererseits überlappende Erfassungsbereiche vorgesehen werden, um den Schwad bzw. Bodenabschnitt, dessen Eigenschaft es zu bestimmen gilt, vollständig und lückenlos abtasten zu können. Erfindungsgemäß zeichnet sich das Gerät durch eine Steuervorrichtung zur Aktivierung der verschiedenen Abtastsensoren nach einer vorbestimmten Zeitabfolge aus derart, dass einander mit ihren Abtastsignalen überlappende und/oder beeinflussende Abtastsensoren nur wechselweise in verschiedenen Zeitfenstern aktiviert werden. Es werden also bei der Abtastung durch einen ersten Sensor bzw. eine erste Gruppe von Sensoren den Messvorgang störende Abtastsensoren ausgeblendet. Durch dieses zeitlich wechselweise Abtasten des Schwads bzw. Bodenabschnitts können die Abtastsensoren zur vollständigen, signalschattenfreien Abtastung des Schwads bzw. Bodenabschnitts optimal angeordnet werden, insbesondere mit einander überlappenden Abtastbereichen und/oder zueinander gegenläufigen und/oder zueinander gegenläufig geneigten Abtastrichtungen, wobei dennoch eine störungsfreie Messsignalaufnahme durch die einzelnen Abtastsensoren gewährleistet ist.

Grundsätzlich könnte die Zeitabfolgesteuerung der Messvorgänge durch die verschiedenen Abtastsensoren dabei vorsehen, dass jeder Sensor einzeln unter Deaktivierung aller anderen Abtastsensoren einen Messvorgang durchführt. Um jedoch auch bei einer größeren Anzahl von Abtastsensoren kurze Messzeiten zu erreichen, die auch bei schnellerer Fahrt eine nahezu vollständige Abtastung ermöglicht, ist in Weiterbildung der Erfindung vorgesehen, dass die Abtastsensoren gruppenweise aktiviert und deaktiviert werden. Vorteilhafterweise werden hierbei die Messvorgänge einander nicht negativ beeinflussender Abtastsensoren zeitparallel durchgeführt bzw. in einem vorbestimmten Zeitfenster zusammengefasst, während die hierbei störenden Abtastsensoren in einem anderen Zeitfenster oder ggf. mehreren anderen Zeitfenstern ihre Messvorgänge durchführen, in denen dann wiederum die erstgenannten Abtastsensoren deaktiviert sind.

Je nach Anzahl und Anordnung bzw. Aufteilung der Abtastsensoren kann es hierbei ausreichend sein, in nur einem Zeitfenster mehrere Abtastsensoren bzw. deren Messvorgänge zusammenzufassen. Um eine minimale Messzeit aller Abtastsensoren zu erzielen, ist vorteilhafterweise jedoch vorgesehen, in jedem Zeitfenster eines Zeitfensterzyklus mehrere Abtastsensoren, deren Abtastsignale einander nicht beeinflussen und/oder separate Bereiche abtasten, durch die genannte Steuervorrichtung gleichzeitig zu aktivieren. Die genannten Zeitfenster wiederholen sich hierbei zyklisch. Sind beispielsweise die Abtastsensoren in drei Gruppen unterteilt, wird die erste Gruppe in einem ersten Zeitfenster, die zweite Gruppe in einem zweiten Zeitfenster und die dritte Gruppe in einem dritten Zeitfenster betrieben, die sich dann zyklisch wiederholen.

Bei benachbarter, beispielsweise linienförmiger Aneinanderreihung und/oder matritzenförmiger Positionierung der Abtastsensoren, werden vorteilhafterweise benachbarte Abtastsensoren nur in verschiedenen Zeitfenstern betrieben, beispielsweise dergestalt, dass in einer ersten Gruppe von Zeitfenstern jeder n-te Abtastsensor aktiviert wird, während in einer zweiten Gruppe von Zeitfenstern, die zwischen den genannten Zeitfenstern der ersten Gruppe liegen, weitere Abtastsensoren aktiviert werden, die zwischen den genannten zweiten Abtastsensoren liegen.

Um eine vollständige Abtastung des Schwads bzw. Bodenabschnitts zu erreichen, sind einander benachbarte Abtastsensoren so nahe aneinander angeordnet, dass sie einander überlappende Signalkeulen besitzen.

Die Auswerteeinheit kann zur Bestimmung der jeweiligen Schwad- bzw. Bodenabschnitteigenschaft die verschiedenen Signalsätze prinzipiell nacheinander auswerten. Dies ermöglicht es, nur eine einzige Recheneinheit zu verwenden.

Vorteilhafterweise kann jedoch die Auswerteeinheit auch mehrere Recheneinheiten umfassen, um zeitparallel bzw. zumindest zeitlich überlappend die in den verschiedenen Zeitfenstern generierten Sensorsignale auszuwerten. Hierdurch können auch aufwändigere Auswertungen, die entsprechend längere Rechenzeit benötigen, durchgeführt werden, ohne dass dies eine entsprechende Beabstandung der Messvorgänge erfordern würde.

Die Auswerteeinheit kann grundsätzlich verschieden ausgebildet sein und nach verschiedenen Auswertestrategien arbeiten. Um bei Abtastsensoren mit einander überlappenden Abtastbereichen keine doppelte Berücksichtigung verschiedener Abtastbereiche zu erhalten, ist in Weiterbildung der Erfindung eine Abgleichseinheit vorgesehen, die die Sensorsignale aus verschiedenen Zeitfenstern miteinander derart abgleicht, dass einander - bezüglich des Abtastbereichs - entsprechende und/oder überlappende Signalebereiche identifiziert und bei der Bestimmung der gesuchten Schwadeigenschaft, insbesondere der Schwadkontur, als Mehrfachsignal berücksichtigt werden. Wird beispielsweise durch zwei nebeneinander angeordnete Abtastsensoren ein mittlerer Streifen eines Schwads sozusagen doppelt erfasst, kann dies durch eine Abgleichung der - dann zwangsweise identischen - Schwadkonturabschnitte bestimmt werden, beispielsweise indem die erhaltenen Konturabschnitte übereinander gelegt werden. Die identifizierten Signalbereiche, die denselben Konturabschnitt wiedergeben, können dann beispielsweise nur einmal berücksichtigt oder als Mittelwert gebildet aus den beiden identifizierten Signalbereichen berücksichtigt werden.

Die Auswerteeinheit kann in Form eines Jobrechners mit Mikroprozessorarchitektur und Software ausgebildet sein, wobei die Auswerteeinheit vorteilhafterweise auf dem landwirtschaftlichen Gerät selbst angeordnet sein kann. Alternativ oder zusätzlich kann auch eine Positionierung der Auswerteeinheit an einer mit dem Gerät verbindbaren Landmaschine vorgesehen sein, beispielsweise kann die Auswerteeinheit am Schlepper platziert sein.

Um zusätzlich zu der wechselweisen Aktivierung verschiedener Abtastsensoren in verschiedenen Zeitfenstern eine übermäßige Beeinflussung der Abtastsensoren durch zu breit reflektierte bzw. streuende Abtastsignale jeweils anderer Abtastsensoren zu vermeiden, kann in Weiterbildung der Erfindung zumindest einem, vorzugsweise mehreren der Abtastsensoren ein Signalschirm zugeordnet sein, der die von einem jeweiligen Sensor abgegebenen Signale auf einen bestimmten Bereich abschirmt und/oder die von einem jeweiligen Abtastsensor empfangenen Rücklaufsignale auf einen bestimmten Bereich eingrenzt. Insbesondere kann ein Trichter an der Sendeeinheit und/oder der Empfängereinheit des jeweiligen Abtastsensors vorgesehen sein, der das abstrahlbare Fenster bzw. das empfangbare Fenster auf einen vorbestimmten Raumwinkelausschnitt begrenzt. Beispielsweise kann dies ein kegelförmiger Trichter sein.

Die Positionierung der Abtastsensoren kann grundsätzlich in verschiedener Weise erfolgen, wobei auch eine Gruppierung in mehrere Abtastsensorgruppen möglich ist, beispielsweise dergestalt, dass eine erste Gruppe von Abtastsensoren an einem Schlepper und eine zweite Gruppe von Abtastsensoren an einem Anbaugerät angebracht ist.

Vorteilhafterweise umfasst die Bodenerfassungseinrichtung zumindest einen sich quer zur Fahrtrichtung erstreckenden Sensorbalken, an dem voneinander beabstandet mehrere Abtastsensoren angeordnet sind. Hierdurch kann es ermöglicht werden, den Boden über die gesamte Arbeitsbreite der Landmaschine abzutasten. Der Sensorbalken kann dabei bei Ausbildung der Landmaschine als Anbaugerät, das an einen Schlepper anbaubar ist, an einem Maschinenrahmen der Landmaschine angeordnet sein. Alternativ kann der Sensorbalken auch an dem Schlepper befestigt werden. Insbesondere um ein in Fahrtrichtung gesehen größeres Vorauseilen der Sensoren zu erreichen, kann ein solcher Sensorbalken frontseitig an dem Schlepper angebaut werden. Es versteht sich, dass auch mehrere Abtastsensoren und/oder Sensorbalken in Fahrtrichtung betrachtet hintereinander angeordnet sein können, beispielsweise ein erster Sensorbalken am Schlepper und ein zweiter Sensorbalken an dem Anbaugerät selbst.

Aus den Messinformationen der Abtastsensoren kann die Auswerteeinheit prinzipiell verschiedene Schwadeigenschaften bzw. Bodenabschnittseigenschaften bestimmen. Vorteilhafterweise umfasst die Auswerteeinrichtung Bestimmungsmittel zur Bestimmung des Schwadquerschnitts, Bestimmungsmittel zur Bestimmung des Schwadschwerpunkts, Bestimmungsmittel zur Bestimmung des Abstands des Schwads vom linken und rechten Rand der Erfassungseinrichtung, Bestimmungsmittel zur Bestimmung der Schwadhöhe, Bestimmungsmittel zur Bestimmung der Schwadbreite und/oder Bestimmungsmittel zur Bestimmung der Außermittigkeit des Schwads relativ zu dem vorgenannten Sensorbalken.

Anhand dieser von der Auswerteeinheit bestimmten Schwad- bzw. Bodenabschnittseigenschaften und -informationen können verschiedene Funktionen abgeleitet werden. Vorteilhafterweise können aus den genannten Eigenschaften bzw. Informationen Steuerbefehle für die jeweilige Landmaschine generiert werden, beispielsweise für einen Schlepper, ein Anbaugerät oder auch eine selbstfahrende Arbeitsmaschine. Beispielsweise können Lenkhilfevorrichtungen gesteuert, oder auch andere Parameter des jeweiligen Geräts eingestellt bzw. gesteuert werden. Wird beispielsweise das Schwadvolumen erfasst, kann die Aufnahmevorrichtung eines Ladewagens entsprechend gesteuert werden.

In vorteilhafter Weiterbildung der Erfindung werden die aus den Abtastsignalen der Abtastsensoren generierten Informationen mit weiteren Informationen des jeweiligen Anbaugeräts und/oder Schleppers verknüpft, um in Abhängigkeit dieser verknüpften Informationen Betriebsparameter zu steuern, beispielsweise Lenk-und/oder Geschwindigkeitsvorschläge zu generieren. Solche weiteren Informationen, mit denen die Informationen aus den Abtastsignalen verknüpft werden können, sind beispielsweise die Fahrgeschwindigkeit, der Kraftstoffverbrauch, der Lenkeinschlag, das Zapfwellendrehmoment, der Füllstand eines Erntegutspeichers oder ähnliche Betriebsparameter.

In vorteilhafter Weiterbildung der Erfindung können die Abtastsensoren bzw. zumindest einige der Abtastsensoren mit akustischen Signalen in einem höheren Frequenzbereich des hörbaren Spektrums und/oder mit Ultraschall arbeiten, um auch die Schwadform und/oder -größe und/oder -dichte des auf dem Boden liegenden Ernteguts zu erfassen. Dabei wird der Erntegutschwad auf dem genannten Bodenabschnitt mit akustischen Signalen von etwa 10 kHz bis 22 kHz und/oder Ultraschallsignalen von etwa 20kHz bis 1 GHz vorzugsweise in Form von Chirpsignalen abgetastet. Diese Chirpsignale werden je nach Frequenz bereits an der Schwadoberfläche reflektiert, so dass eine Aussage über die Schwadkontur und damit die zu verarbeitende Erntegutmenge und damit die benötigte Aufnahmeleistung getroffen werden kann.

Alternativ oder zusätzlich kann die Bodenerfassung mit Hilfe von akustischen Sensoren durchgeführt werden, die im hörbaren Frequenzspektrum arbeiten. Dabei wird der zu erfassende Bodenabschnitt mit akustischen Signalen in einem Frequenzbereich von 20 Hz bis 8 kHz abgetastet. Eine Bodenabtastung mit Schallwellen in diesem Frequenzbereich erweist sich als besonders vorteilhaft, um ein Durchdringen von Erntegut zu erreichen und Reflektionen des Abtastsignals an der Schwadoberfläche zu vermeiden. Es wird eine konstante Arbeitsgeschwindigkeit in Luft, Heu, Stroh und Gras erreicht. Hierdurch können beispielsweise Fremdkörper im aufzunehmenden Erntegutschwad sicher erkannt werden. Auch das Bodenrelief wird unabhängig von darauf liegendem Erntegut präzise erfaßt, wodurch eine exakte Höhensteuerung bzw. Bodenanpassung der Arbeitseinrichtungen der Landmaschine erreicht werden kann. Vorzugsweise erfolgt die Bodenabtastung hierbei im Frequenzbereich von 800 Hz bis 4 kHz.

Die Abtastung des Bodens erfolgt dabei vorteilhafter Weise ausreichend weit vor der jeweiligen Arbeitseinrichtung, so dass diese vorausschauend angesteuert werden kann, um in der gewünschten Weise zu arbeiten. Insbesondere kann hierbei die Höhenführung der Arbeitseinrichtung, aber auch deren Arbeitsleistung an das im nächsten Moment überfahrene Bodenprofil bzw. den ankommenden Erntegutschwad angepaßt werden. Alternativ oder zusätzlich kann jedoch auch ein Bodenabschnitt hinter dem Arbeitsaggregat abgetastet werden, beispielsweise um das von der Arbeitseinrichtung erzielte Arbeitsergebnis zu erfassen. Grundsätzlich könnte auch ein neben dem Arbeitsaggregat liegender Bodenabschnitt erfaßt werden, beispielsweise um eine Bearbeitungskante zu erfassen oder bereits die in der nächsten Schleife erfaßte Wegstrecke zu erfassen.

Grundsätzlich kann die Bodenerfassungseinrichtung mehrere Abtastsensoren aufweisen, die in den verschiedenen Frequenzbereichen arbeiten. Um jedoch eine einfach bauende, kostengünstige Ausführung zu erreichen, kann in Weiterbildung der Erfindung vorgesehen sein, dass die Abtastsensoren abwechselnd in zwei verschiedenen Betriebsarten betrieben werden kann. Insbesondere können die Abtastsensoren sowohl in einem Bodenerfassungsmodus arbeiten, in dem der Boden mit Signalen im Frequenzbereich von 20 Hz bis 8 kHz abgetastet wird als auch in einem Schwaderfassungsmodus arbeiten, in dem der Boden zur Schwaderfassung mit Abtastsignalen in einem höheren hörbaren Frequenzbereich insbesondere von 10 bis 22 kHz abgetastet wird. Während das Bodenrelief möglichst kontinuierlich erfaßt wird und der Sensor hierzu möglichst kontinuierlich in dem niedrigen Frequenzbereich arbeitet, kann es für die Schwadformerkennung ausreichend sein, in vorgegebenen zeitlichen Abständen entsprechende Chirpsignale in dem höheren Frequenzbereich auszusenden. Durch den Betrieb des Abtastsensors in verschiedenen Betriebsmodi kann ein und derselbe Sensor verschiedene Abtastaufgaben erledigen.

Vorteilhafterweise arbeiten die Abtastsensoren mit einem breitbandigen Signal. Durch solche breitbandigen Sendesignale wird die Abtastung sozusagen immun gegen Umgebungsgeräusche.

Nach einer vorteilhaften Ausführung der Erfindung arbeiten die Abtastsensoren zur Bodenabtastung mit einer Gauß'schen Pulsfamilie. Besonders vorteilhaft ist dabei die Verwendung einer Gauß'schen Pulsfamilie zweiter Ordnung mit Frequenzen zwischen 800 Hz und 4 kHz. Mit Hilfe einer solchen Verteilung der Abtastsignale nach dem sogenannten "Mexican hat" kann eine präzise Erfassung bei weitestgehender Ausblendung von Störeinflüssen erreicht werden.

Die Länge der Signalpulse kann dabei grundsätzlich verschieden festgelegt werden. In vorteilhafter Weise arbeiten die Abtastsensoren mit Signalpulsen von einer Dauer von weniger als 10 ms, vorzugsweise weniger als 5 ms. Nach einer besonders vorteilhaften Ausführung können Signalspulse mit einer Dauer von etwa 0,3 ms Verwendung finden.

Um in der gewünschten Weise mit Breitbandsignalen den Boden abtasten zu können, umfasst der Abtastsensor in Weiterbildung der Erfindung einen Breitbandlautsprecher sowie einen Breitbandempfänger für einen Frequenzbereich von 20 Hz bis 1 GHz.

In Weiterbildung der Erfindung können in Abhängigkeit der verschiedenen Abtastsignale in den verschiedenen Frequenzbereichen, insbesondere den Auswertungen hiervon, verschiedene Arbeitseinrichtungen bzw. verschiedene Betriebsparameter der Landmaschine gesteuert werden. Beispielsweise kann in Abhängigkeit des niedrigerfrequenten Abtastsignals im Frequenzbereich unter 8 kHz bzw. der Auswertung dieses Signales eine Höheneinstellung eines Arbeitsaggregats, beispielsweise einer Aufnahmevorrichtung eines Ladewagens wie einer Pick-Up mit Stachelwalze, gesteuert werden. Zum anderen kann in Abhängigkeit des höherfrequenten Chirpsignals im Frequenzbereich über 10 kHz die Arbeitsleistung eines Arbeitsaggregats gesteuert werden, beispielsweise kann die Drehgeschwindigkeit der Stachelwalze einer Ladewagen Pick-Up oder der Aufnahmefördereinrichtung erhöht werden, wenn mit Hilfe der Chirpsignale eine Zunahme des Erntegutvolumens erfaßt wird.

Die vorliegende Erfindung wird nachfolgend anhand bevorzugter Ausführungsbeispiele und zugehöriger Zeichnungen näher erläutert. In den Zeichnungen zeigen:
- Figur 1:: eine schematische Seitenansicht eines Ladewagens nach einer bevor- zugten Ausführung der Erfindung, bei dem eine Erfassungseinrichtung mit zwei Sensorbalken jeweils umfassend einen ersten Satz von Abtast- sensoren am Ladewagenrahmen und einen zweiten Satz von Abtastsen- soren am Schlepper vorgesehen ist, und
- Figur 2:: eine Frontansicht eines Sensorbalkens der Erfassungseinrichtung.

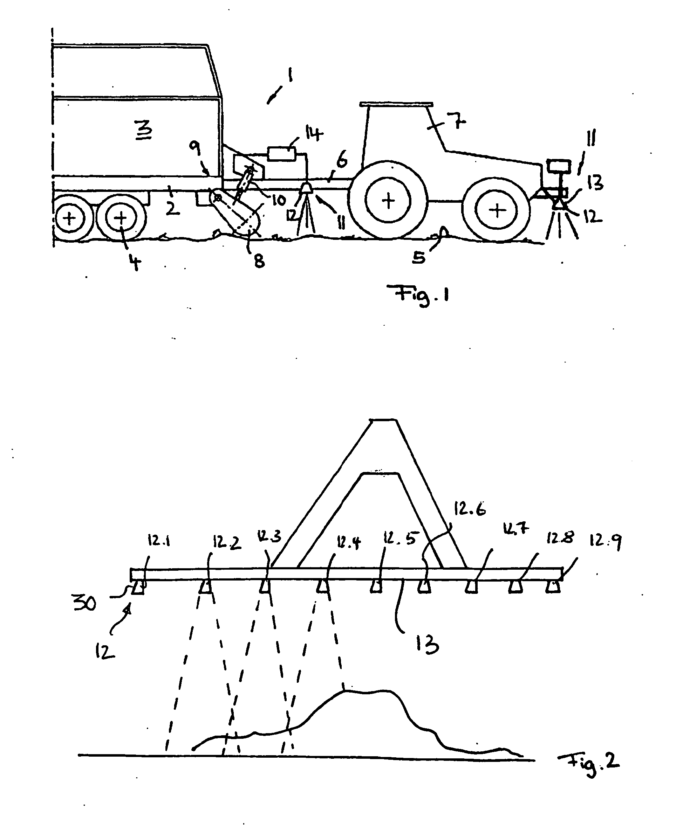

Der in Figur 1 gezeigte Ladewagen 1 besitzt einen Maschinenrahmen 2, der einen Erntegutspeicher 3 trägt und selbst von einem Fahrwerk 4 getragen wird, so dass er auf dem zu bearbeitenden Boden 5 fahren kann. Mittels einer Deichsel 6 ist der Ladewagen 1 an einen Schlepper 7 ankuppelbar, so dass er von diesem gezogen werden kann.

An dem Maschinenrahmen 2 ist als Erntevorsatz eine Aufnahmevorrichtung in Form einer Pick-Up 8 mit einer rotierenden Stachelwalze zur Aufnahme von auf dem Boden liegenden Erntegut sowie eine Fördereinrichtung 9 zur Förderung des aufgenommenen Ernteguts in den Erntegutspeicher 3 vorgesehen.

Die genannte Pick-Up 8 ist an dem Maschinenrahmen 2 höhenverstellbar angelenkt und kann durch einen Kraftheber 10 in Form eines Hydraulikzylinders gegenüber dem Maschinenrahmen 2 angehoben und abgesenkt werden. Obwohl eine hydraulische Ausführung der Hubvorrichtung bevorzugt ist, versteht es sich, dass auch andere Ausbildungen eines Krafthebers 10 vorgesehen werden können.

Zur Erfassung eines in Fahrtrichtung vor der Pick-Up 8 liegenden Bodenabschnitts 5 umfasst der Ladewagen 1 eine Bodenerfassungseinrichtung 11, die in der gezeichneten Ausführungen zwei Sätze von Abtastsensoren 12 umfasst. Jeder Satz von Abtastsensoren 12 umfasst dabei vorteilhafterweise eine Mehrzahl von Abtastsensoren, die auf einem sich quer zur Fahrtrichtung erstreckenden Sensorbalken 13 voneinander beabstandet angeordnet sind. Der erste Sensorbalken 13 ist an der Deichsel 6 des Ladewagens 1 angeordnet, um den unmittelbar vor der Pick-Up 8 liegenden Bodenabschnitt abzutasten. Der zweite Sensorbalken 13 ist frontseitig an dem Schlepper 7 anbaubar, um einen weiter vorne liegenden Bodenabschnitt abtasten zu können.

Wie Fig. 2 zeigt, sind an einem Sensorbalken 13 in der gezeichneten Ausführung vorteilhafterweise mehr als drei, insbesondere mehr als fünf Abtastsensoren im Wesentlichen entlang einer Linie in gleichmäßigem Abstand voneinander aufgereiht, wobei sich der Sensorbalken über die gesamte Spurbreite der jeweiligen Landmaschine erstreckt und die Abtastsensoren die gesamte Spurbreite des Geräts abdecken.

Die Abtastsensoren 12 sind hierbei gemäß Fig. 2 derart angeordnet, dass sich ihre durch die ausgesendeten Abtastsignale abgedeckten Abtastbereiche überlappen, wodurch eine vollständige Abtastung des jeweiligen Bodenabschnitts und/oder des Schwads sichergestellt ist.

In der eingangs beschriebenen Weise werden dabei die Abtastsensoren 13 von einer Steuervorrichtung 14 wechselweise in verschiedenen Zeitfenstern aktiviert. Beispielsweise werden in einem ersten Zeitfenster die Abtastsensoren 12.1, 12.4 und 12.7, sodann in einem zweiten Zeitfenster die Abtastsensoren 12.2, 12.5 und 12.8 sowie schließlich in einem dritten Zeitfenster die Abtastsensoren 12.3, 12.6 und 12.9 aktiviert, um einen entsprechenden Messvorgang durchzuführen, vgl. Fig. 2. In den jeweils anderen Zeitfenstern sind die jeweiligen Abtastsensoren dabei deaktiviert, um die Messvorgänge der dann aktivierten Sensoren nicht zu stören.

Die Abtastsensoren 12 können dabei nach einer vorteilhaften Ausführung der Erfindung akustische Sensoren sein, die im hörbaren Frequenzspektrum und/oder im Ultraschallbereich arbeiten und jeweils einen Breitbandsender sowie einen Breitbandempfänger besitzt, die für einen Frequenzbereich von 20 Hz bis 1 GHz geeignet sind.

Um das Bodenrelief abzutasten, arbeiten die Abtastsensoren 12 mit einem breitbandigen Abtastsignal in einem Frequenzbereich von 20 Hz bis 8 kHz, vorzugsweise 100 Hz bis 4 kHz. Hierdurch kann eine gute Durchdringung eines auf dem Boden liegenden Erntegutschwads erreicht werden, ohne dass die Abtastsignale an der Schwadoberfläche reflektiert werden würden. Zudem wird eine gleichbleibende Ausbreitungsgeschwindigkeit sichergestellt, so dass durch die unterschiedlichen Signallaufzeiten zwischen im Erntegutschwad liegenden Fremdkörpern wie großen Steinen und der Bodenoberfläche unterschieden werden kann.

Zusätzlich zu diesem Bodenerfassungs-Betriebsmodus arbeiten die Abtastsensoren 12 darüber hinaus in einem Schwadformerfassungsmodus, in dem sie Chirpsignale in einem Frequenzbereich von 10 kHz bis 1GHz, beispielsweise 10 kHz bis 22 kHz abgeben und die Signalreflektionen erfassen. Dabei können diese Chirpsignale hinsichtlich ihres Frequenzverlaufes ein Sägezahnprofil aufweisen, bei dem mit einer Startfrequenz f₀ von etwa 10 kHz und einer Bandbreite B von etwa 12 kHz gearbeitet werden. Die Chirpdauer T beträgt dabei etwa 3 ms. Diese höherfrequenten Chirpsignale werden an der Oberfläche des Erntegutschwads reflektiert, so dass die empfangenen, reflektierten Signale die Schwadform charakterisieren. In einer Auswertelogik können hieraus Rückschlüsse über die Größe des Schwads, also sein Volumen gezogen werden.

Die Abtastsensoren 12 sind dabei mit einer Steuereinrichtung 14 verbunden, die eine Auswerteeinheit aufweist, um die von den Abtastsensoren 12 erhaltenen Signale auszuwerten. Die Auswertung kann dabei grundsätzlich in verschiedener Art und Weise erfolgen, wie dies eingangs erläutert wurde.

Die Steuereinrichtung 14 kann dann in Abhängigkeit der ausgewerteten Signale der Abtastsensoren 12 beispielsweise die Arbeitsaggregate des Ladewagens 1 ansteuern oder auch Lenk- oder Steuersignale für den Schlepper generieren. Insbesondere wird beispielsweise der Kraftheber 10 zur Höheneinstellung der Pick-Up 8 in Abhängigkeit der Signale der Abtastsensoren 12 gesteuert, um die Höhenführung der Pick-Up 8 an das erfaßte Bodenrelief anzupassen. Die Höhensteuerung arbeitet dabei vorteilhafter Weise mit den niedrigerfrequenten Abtastsignalen im vorgenannten Bereich von 20 Hz bis 8 kHz bzw. den Auswertungen dieser Signale, so dass die Höhensteuerung exakt dem Verlauf der Bodenkontur folgt bzw. Hindernisse wie Steine im Erntegutschwad berücksichtigt.

Die Chirpsignale im höherfrequenten Bereich zur Erfassung der Schwadform werden hingegen vorteilhafterweise zur Steuerung der Arbeitsleistung der Arbeitsaggregate des Ladewagens 1 verwendet. Insbesondere kann eine Steuerung der Drehzahl der Pick-Up 8 sowie der nachgeschalteten Fördereinrichtung 9 in Abhängigkeit dieser Chirpsignale bzw. ihrer Auswertungen erfolgen. Erfassen die Abtastsensoren 12 eine Zunahme des Schwadvolumens, kann die Drehzahl der Fördereinrichtung erhöht werden.

Auch wenn ein Ladewagen eine besonders vorteilhafte Anwendung der vorliegenden Erfindung darstellt, können auch andere Landmaschinentypen mit der Bodenerfassungseinrichtung 11 ausgestattet werden.

## Patentansprüche

1. Landwirtschaftliches Gerät, insbesondere für eine Erntemaschine wie Ladewagen oder Presse, mit mindestens einer Erfassungseinrichtung (11) zur berührungslosen Erfassung zumindest einer Schwad- und/oder einer Bodeneigenschaft, insbesondere Höhe, Breite und/oder Kontur eines Schwads oder Bodenabschnitts, die mehrere berührungslos arbeitende Abtastsensoren (12) zur Abtastung des Schwads und/oder des Bodenabschnitts sowie eine Auswerteeinheit (14) zur Bestimmung der Erntegutschwad- und/oder Bodeneigenschaft aus den mehreren Signalen der Abtastsensoren aufweist, **dadurch gekennzeichnet, dass** eine Steuervorrichtung zur Aktivierung der verschiedenen Abtastsensoren (12) nach einer vorbestimmten Zeitabfolge derart, dass einander mit ihren Abtastsignalen überlappende und/oder beeinflussende Abtastsensoren (12) wechselweise in verschiedenen Zeitfenstern aktiviert werden, vorgesehen ist.

2. Landwirtschaftliches Gerät nach dem vorhergehenden Anspruch, wobei in zumindest einem, vorzugsweise jedem, der Zeitfenster eines Zeitfensterzyklus mehrere Abtastsensoren (12), deren Abtastsignale einander nicht beeinflussen und/oder separate Bereiche abtasten, gleichzeitig von der Steuervorrichtung aktivierbar sind.

3. Landwirtschaftliches Gerät nach einem der vorhergehenden Ansprüche, wobei in einer ersten Gruppe von Zeitfenstern jeder n-te, insbesondere jeder dritte Abtastsensor (12.1, 12.4, 12.7) aktivierbar ist und in einer zweiten Gruppe von Zeitfenstern, die zwischen den Zeitfenstern der genannten ersten Gruppe liegen, mehrere zwischen den genannten n-ten Abtastsensoren (12.1, 12.4, 12.7) liegende Abtastsensoren (12.2, 12.5, 12.8; 12.3, 12.6, 12.9) von der Steuervorrichtung aktivierbar sind, wobei in der genannten zweiten Gruppe von Zeitfenstern die in der ersten Gruppe von Zeitfenstern aktivierten Abstandssensoren deaktiviert sind.

4. Landwirtschaftliches Gerät nach einem der vorhergehenden Ansprüche, wobei einander benachbarte Abtastsensoren (12) einander überlappende Signalkeulen besitzen und nur in zueinander verschiedenen Zeitfenstern betreibbar sind.

5. Landwirtschaftliches Gerät nach einem der vorhergehenden Ansprüche, wobei die Auswerteeinheit (14) mehrere Recheneinheiten zur zeitparallelen oder zumindest zeitlich überlappenden Auswertung der in verschiedenen Zeitfenstern erhaltenen Sensorsignale aufweist.

6. Landwirtschaftliches Gerät nach einem der vorhergehenden Ansprüche, wobei die Auswerteeinheit (14) eine Abgleichseinheit zum Abgleich der Sensorsignale aus verschiedenen Zeitfenstern besitzt derart, dass einander bezüglich des Abtastbereichs entsprechende und/oder überlappende Signalteile identifiziert und bei der Bestimmung der gesuchten Schwadeigenschaft, insbesondere Schwadkontur, als Mehrfachsignal berücksichtigt werden.

7. Landwirtschaftliches Gerät nach einem der vorhergehenden Ansprüche, wobei die Auswerteeinheit (14) Bestimmungsmittel zur Bestimmung des Volumens und/oder der Dichte und/oder der Geometrie und/oder der Fläche und/oder der Relativposition des Erntegutschwads aufweist.

8. Landwirtschaftliches Gerät nach einem der vorhergehenden Ansprüche, wobei die Abtastsensoren (12) entlang einer Linie quer zur Fahrtrichtung angeordnet sind und/oder die Bodenerfassungseinrichtung (11) zumindest einen sich quer zur Fahrtrichtung, vorzugsweise über die gesamte Spurbreite des Geräts erstreckenden Sensorbalken (13) aufweist, an dem voneinander vorzugsweise gleichmäßig beabstandet mehrere, insbesondere zumindest fünf, Abtastsensoren (12) angeordnet sind.

9. Landwirtschaftliches Gerät nach einem der vorhergehenden Ansprüche, wobei zumindest einem, vorzugsweise allen, der Abtastsensoren (12) ein vorzugsweise trichterförmiger Signalschirm (30) zur Begrenzung des vom jeweiligen Abtastsensor (12) abgegebenen Abtastsignals und/oder einfangbaren Rücklaufsignals zugeordnet ist.

10. Landwirtschaftliches Gerät nach einem der vorhergehenden Ansprüche, wobei zumindest einer der Abtastsensoren (12) mit Chirpsignalen in einem höheren Frequenzbereich von etwa 10 kHz bis 1GHz, vorzugsweise 10 kHz bis 22 kHz, Erntegut auf dem Bodenabschnitt hinsichtlich Form, Oberflächenkontur und/oder Volumen abtastet.

11. Landwirtschaftliches Gerät nach einem der vorhergehenden Ansprüche, wobei zumindest einer der Abtastsensoren als akustischer, im hörbaren Frequenzspektrum arbeitender Abtastsensor (12) ausgebildet ist, der den Bodenabschnitt mit akustischen Signalen in einem Frequenzbereich von 20 Hz bis 8 kHz abtastet, wobei der zumindest eine Abtastsensor (12) mit einem breitbandigen Abtastsignal arbeitet.

12. Landwirtschaftliches Gerät nach einem der vorhergehenden Ansprüche, wobei der zumindest eine Abtastsensor (12) zur Bodenabtastung mit einer Gauß'schen Pulsfamilie, vorzugsweise einer Gauß'sche Pulsfamilie zweiter Ordnung mit Frequenzen zwischen 800 Hz und 4 kHz, und/oder mit Signalpulsen von einer Dauer von weniger als 10 ms, vorzugsweise weniger als 1 ms, insbesondere etwa 0,3 ms, arbeitet.

13. Landwirtschaftliches Gerät nach einem der vorhergehenden Ansprüche, wobei zumindest einer der Abtastsensoren (12) sowohl in einem Bodenerfassungsmodus, in dem der Abtastsensor (12) zur Bodenabtastung in dem genannten Frequenzbereich von 20 Hz bis 8 kHz arbeitet, als auch in einem Ernteguterfassungsmodus, in dem der Abtastsensor (12) zur Ernteguterfassung in einem Frequenzbereich von 10 kHz bis 22 kHz arbeitet, betreibbar ist, wobei der zumindest eine Abtastsensor (12) einen Breitbandsender sowie einen Breitbandempfänger jeweils für einen Frequenzbereich von 20 Hz bis 1 GHz aufweist.

14. Landwirtschaftliches Gerät nach einem der vorhergehenden Ansprüche, wobei die Steuereinrichtung (14) in Abhängigkeit der niederfrequenten Abtastsignale einen ersten Maschinenparameter und in Abhängigkeit der höherfrequenten Chirpsignale einen zweiten, von dem ersten verschiedenen Maschinenbetriebsparameter steuert.

15. Landwirtschaftliches Gerät nach einem der vorhergehenden Ansprüche, wobei die Erfassungseinrichtung (11) mit den Abtastsensoren (12) einen Bussystem-Anschluss, insbesondere einen ISOBUS-Anschluss, zur Anbindung an ein Bussystem des Geräts und/oder eines damit verbindbaren Schleppers aufweist.

## Claims

1. An agricultural apparatus, in particular for a harvester such as a self-loading waggon or press, having at least one detection device (11) for the contactless detection of at least one swath property and/or one ground property, in particular the height, width and/or contour of a swath or of a ground section, which has a plurality of contactlessly operating scanning sensors (12) for scanning the swath and/or the ground section and also has an evaluation unit (14) for determining the crop swath property and/or ground property from the plurality of signals of the scanning sensors, **characterised in that** a control apparatus is provided for activating the different scanning sensors (12) in accordance with a predefined time sequence such that scanning sensors (12) mutually overlapping and/or influencing with their scanning signals are activated alternately in different time windows.

2. An agricultural apparatus in accordance with the preceding claim, wherein a plurality of scanning sensors (12) whose scanning signals do not influence one another and/or scan separate regions can be activated simultaneously by the control apparatus in at least one time window, preferably in each time window of a time window cycle.

3. An agricultural apparatus in accordance with one of the preceding claims, wherein every nth, in particular every third scanning sensor (12.1., 12.4, 12.7) can be activated in a first group of time windows and a plurality of scanning sensors (12.2, 12.5, 12.8; 12.3, 12.6, 12.9) disposed between the named nth scanning sensors (12.1, 12.4, 12.7) can be activated by the control apparatus in a second group of time windows which are disposed between the time windows of the named first group, wherein the scanning sensors activated in the first group of time windows are deactivated in the named second group of time windows.

4. An agricultural apparatus in accordance with one of the preceding claims, wherein mutually adjacent scanning sensors (12) have mutually overlapping signal lobes and can only be operated in mutually different time windows.

5. An agricultural apparatus in accordance with one of the preceding claims, wherein the evaluation unit (14) has a plurality of processing units for the evaluation of the sensor signals obtained in different time windows parallel in time or at least overlapping in time.

6. An agricultural apparatus in accordance with one of the preceding claims, wherein the evaluation unit (14) has a comparator unit for comparing the sensor signals of different time windows such that signal portions corresponding to one another and/or overlapping with respect to the scanning region are identified and are taken into account as a multiple signal in the determination of the sought swath property, in particular the swath contour.

7. An agricultural apparatus in accordance with one of the preceding claims, wherein the evaluation unit (14) has determination means for determining the volume and/or the density and/or the geometry and/or the area and/or the relative position of the crop swath.

8. An agricultural apparatus in accordance with one of the preceding claims, wherein the scanning sensors (12) are arranged along a line transversely to the direction of travel and/or the ground detection device (11) has at least one sensor bar (13) which extends transversely to the direction of travel, preferably over the total track width of the apparatus, and at which a plurality of scanning sensors (12), in particular at least five scanning sensors, are arranged spaced apart from one another, preferably uniformly.

9. An agricultural apparatus in accordance with one of the preceding claims, wherein a signal screen (30), preferably of funnel shape, is associated with at least one, preferably all of the scanning sensors (12) for limiting the scanning signal output by the respective scanning sensor (12) and/or the receivable return signal.

10. An agricultural apparatus in accordance with one of the preceding claims, wherein at least one of the scanning sensors (12) scans crop on the ground section with respect to shape, surface contour and/or volume using chirp signals in a higher frequency range from approximately 10 kHz to 1 GHz, preferably 10 kHz to 22 kHz.

11. An agricultural apparatus in accordance with one of the preceding claims, wherein at least one of the scanning sensors is designed as an acoustic scanning sensor (12) operating in the audible frequency spectrum which scans the ground section with acoustic signals in a frequency range from 20 Hz to 8 kHz, with the at least one scanning sensor (12) working with a broadband scanning signal.

12. An agricultural apparatus in accordance with one of the preceding claims, wherein the at least one scanning sensor (12) works for ground scanning with a Gaussian pulse family, preferably a Gaussian pulse family of the second order, with frequencies between 800 Hz and 4 kHz, and/or with signal pulses of a duration of less than 10 ms, preferably less than 1 ms, in particular approximately 0.3 ms.

13. An agricultural apparatus in accordance with one of the preceding claims, wherein at least one of the scanning sensors (12) can be operated both in a ground detection mode in which the scanning sensor (12) works for ground scanning in the named frequency range from 20 Hz to 8 kHz and in a crop detection mode in which the scanning sensor (12) works for crop detection in a frequency range from 10 kHz to 22 kHz, with the at least one scanning sensor (12) have a broadband transmitter and a broadband receiver, each for a frequency range from 20 Hz to 1 GHz.

14. An agricultural apparatus in accordance with one of the preceding claims, wherein the control device (14) controls a first machine parameter in dependence on the low frequency scanning signals and a second machine operating parameter different from the first in dependence on the higher frequency chirp signals.

15. An agricultural apparatus in accordance with one of the preceding claims, wherein the detection device (11) with the scanning sensors (12) has a bus system connection, in particular an ISOBUS connection for connection to a bus system of the apparatus and/or of a tractor which can be connected thereto.

## Revendications

1. Appareil agricole, en particulier pour une moissonneuse telle que autochargeuse ou presse, comprenant au moins un dispositif de détection (11) pour la détection sans contact d'au moins une propriété d'andain et/ou une propriété de sol, en particulier la hauteur, la largeur et/ou le contour d'un andain ou d'une partie de sol, qui présente plusieurs capteurs de balayage (12) travaillant sans contact pour le balayage de l'andain et/ou de la partie de sol et une unité d'analyse (14) pour la détermination de la propriété d'andain pour matière à récolter et/ou de la propriété de sol à partir des plusieurs signaux des capteurs de balayage, **caractérisé en ce qu'**un dispositif de commande est prévu pour l'activation des différents capteurs de balayage (12) selon une séquence de temps prédéfinie, de telle sorte que des capteurs de balayage (12), qui se chevauchent ou s'influencent avec leurs signaux de balayage, soient activés alternativement dans différentes fenêtres temporelles.

2. Appareil agricole selon la revendication précédente, sur lequel plusieurs capteurs de balayage (12), dont les signaux de balayage ne s'influencent pas et/ou balaient des zones séparées, peuvent être activés simultanément par le dispositif de commande dans au moins une, de préférence chacune des fenêtres temporelles d'un cycle de fenêtre temporelle.

3. Appareil agricole selon l'une des revendications précédentes, sur lequel chaque n-ième, en particulier chaque troisième capteur de balayage (12.1, 12.4, 12.7) peut être activé dans un premier groupe de fenêtres temporelles et plusieurs capteurs de balayage (12.2, 12.5, 12.8; 12.3, 12.6, 12.9) disposés entre lesdits n-ièmes capteurs de balayage (12.1, 12.4, 12.7) peuvent être activés par le dispositif de commande dans un second groupe de fenêtres temporelles, qui se situent entre les fenêtres temporelles dudit premier groupe cité, les capteurs de distance activés dans le premier groupe de fenêtres temporelles étant désactivés dans ledit second groupe de fenêtres temporelles.

4. Appareil agricole selon l'une des revendications précédentes, sur lequel des capteurs de balayage (12) voisins les uns des autres présentent des lobes de rayonnement de signal qui se chevauchent et ne peuvent être utilisés que dans des fenêtres temporelles différentes les unes des autres.

5. Appareil agricole selon l'une des revendications précédentes, sur lequel l'unité d'analyse (14) présente plusieurs unités de calcul pour l'analyse parallèle dans le temps ou au moins se chevauchant dans le temps des signaux de capteur, reçus dans différentes fenêtres temporelles.

6. Appareil agricole selon l'une des revendications précédentes, sur lequel l'unité d'analyse (14) présente une unité d'équilibrage pour l'équilibrage des signaux de capteur provenant de différentes fenêtres temporelles, de telle sorte que des parties de signal qui se correspondent et/ou se chevauchent par rapport à la zone de balayage sont identifiées et sont prises en compte lors de la détermination de la propriété d'andain recherchée, en particulier du contour d'andain, comme signal multiple.

7. Appareil agricole selon l'une des revendications précédentes, sur lequel l'unité d'analyse (14) présente des moyens de détermination pour déterminer le volume et/ou la densité et/ou la géométrie et/ou la surface et/ou la position relative de l'andain de matière à récolter.

8. Appareil agricole selon l'une des revendications précédentes, sur lequel les capteurs de balayage (12) sont disposés le long d'une ligne transversalement au sens de marche et/ou le dispositif de détection de sol (11) présente au moins une barre de capteur (13) s'étendant transversalement au sens de marche, de préférence sur toute la largeur de trace de l'appareil, barre sur laquelle sont disposés plusieurs, en particulier au moins cinq, capteurs de balayage (12) espacés de préférence uniformément les uns des autres.

9. Appareil agricole selon l'une des revendications précédentes, sur lequel un écran de signal (30) de préférence en forme d'entonnoir est attribué à au moins un, de préférence l'ensemble des capteurs de balayage (12), pour la limitation du signal de balayage émis par le capteur de balayage (12) respectif et/ou du signal de retour pouvant être capté.

10. Appareil agricole selon l'une des revendications précédentes, sur lequel au moins l'un des capteurs de balayage (12) balaie la matière à récolter sur la partie de sol au niveau de la forme, du contour de surface et/ou des volumes avec des signaux Chirp dans une plage de fréquences supérieure d'environ 10 kHz à 1 GHz, de préférence 10 kHz à 22 kHz.

11. Appareil agricole selon l'une des revendications précédentes, sur lequel au moins l'un des capteurs de balayage (12) est conçu sous forme de capteur de balayage (12) acoustique, travaillant dans la plage de fréquences audibles, lequel balaie la partie de sol avec des signaux acoustiques dans une plage de fréquences de 20 Hz à 8 kHz, le au moins un capteur de balayage (12) travaillant avec un signal de balayage à bande large.

12. Appareil agricole selon l'une des revendications précédentes, sur lequel le au moins un capteur de balayage (12) travaille pour le balayage du sol avec une famille d'impulsions de Gauss, de préférence d'une famille d'impulsions de Gauss de second ordre avec des fréquences comprises entre 800 Hz et 4 kHz, et/ou avec des impulsions de signal d'une durée de moins de 10 ms, de préférence de moins de 1 ms, en particulier environ 0,3 ms.

13. Appareil agricole selon l'une des revendications précédentes, sur lequel au moins l'un des capteurs de balayage (12) peut être exploité aussi bien dans un mode de détection de sol, dans lequel le capteur de balayage (12) travaille pour le balayage de sol dans ladite plage de fréquences de 20 Hz à 8 kHz, que dans un mode de détection de matière à récolter, dans lequel le capteur de balayage (12) travaille pour la détection de matière à récolter dans une plage de fréquences de 10 kHz à 22 kHz, sachant que le au moins un capteur de balayage (12) présente un émetteur à large bande et un récepteur à large bande à chaque fois pour une plage de fréquences de 20 Hz à 1 GHz.

14. Appareil agricole selon l'une des revendications précédentes, sur lequel le dispositif de commande (14) commande un premier paramètre de machine en fonction des signaux de balayage à basse fréquence et un second paramètre de fonctionnement de machine différent du premier en fonction des signaux Chirp à fréquence plus élevée.

15. Appareil agricole selon l'une des revendications précédentes, sur lequel le dispositif de détection (11) présente avec les capteurs de balayage (12) un branchement de système de bus, en particulier un branchement ISOBUS, pour le rattachement à un système de bus de l'appareil et/ou d'un tracteur pouvant être relié à celui-ci.
